# EUROPEAN PATENT SPECIFICATION

(11) **EP 1 589 080 B1**
(45) Date of publication and mention of the grant of the patent: **27.02.2008**
(21) Application number: 03785975.8
(22) Date of filing: 23.12.2003
(51) Int. Cl.: C09D 4/02, B41M 1/04, B41M 7/00

(54) **METHOD OF PRODUCING A FLEXOGRAPHIC VARNISH AND PRODUCT THUS OBTAINED**
HERSTELLUNGSVERFAHREN FÜR FLEXODRUCKLACK UND DARAUS GEWONNENES PRODUKT
PROCEDE DE FABRICATION D'UN VERNIS FLEXOGRAPHIQUE ET PRODUIT AINSI OBTENU

(30) Priority: 28.01.2003 ES 200300208
(43) Date of publication of application: 26.10.2005
(73) Proprietor: Chimigraf Iberica, S.L., 08191 Rubi (ES)
(72) Inventor: LOPEZ MUNOZ, Antonio, 08191 Rubi (ES)
(74) Representative: Manresa Val, Manuel
(86) International application number: PCT/ES2003/000654
(87) International publication number: WO 2004/067648

(56) References cited:
- WO-A-02/060700
- WO-A-03/002557
- ES-A- 8 706 071
- US-A- 5 616 364

## Description

This is a process for the production of a flexographic varnish and product obtained with the following steps combining acrylic oligomers with tri-functional monomers in order to obtain a different application viscosity of between 30 and 50 seconds of Ford cup No 4, at 35°C; adding a photoinitiator, which releases free radicals in the presence of ultraviolet light, with stirring, adding a silicone, with a high degree of shearing with stirring, passing the varnish through filters of between 10 and 1 microns; subjecting the filtered varnish to an in-line polymerisation test, consisting of checking the insolubility of the polymerised varnish through contact with alcohol in the following proportions: oligomers between 7 and 30%, tri-functional monomers between 30 and 55%, photoinitiators between 5 and 15%, polymerisation coinitiators between 4 and 17% and silicones between 0.5 and 2%.

### BACKGROUND TO THE INVENTION

Various patents are already known in the state of the art, which protect the production and manufacturing methods of flexographic varnishes.

Thus, the Japanese patent No JP5171089, belonging to Sakata Corp., protects a varnish for flexographic printing varnish that consists of the following components: a resin layer that contains at least one member selected from the group of phenolic resins, a alkydic resin and a trementine resin, a vegetable oil and a petroleum solvent with a high boiling point, in which the resin polar groups are degraded using an amino resin at a temperature equal to or less than the softening temperature of the resin layer.

### BRIEF DESCRIPTION OF THE APPLICATION

As has already been stated, the use of flexographic varnishes is known in the state of the art for reproducing holograms on fabrics and paper.

Flexographic varnishes that are polymerised by ultraviolet radiation are currently employed in the printing of holograms on fabrics, paper, films and plastics.

Thus, they can follow a procedure, such as: a hologram that will come into contact with a layer of flexographic varnish is printed onto a nickel die (also known as the "master shim") and the said varnish is pressed against the nickel die.

Ultraviolet radiation is emitted on the side of the varnish layer that is not in contact with the die, through the film on which the varnish is printed. That ultraviolet radiation causes the polymerisation of the varnish layer in contact with the die, the such way that the hologram that was previously printed on the die is reproduced over the varnish layer.

This varnish is notable because of the following specifications; a different application viscosity of between 30 and 50 seconds is obtained, with a Ford cup No of 4 at 35°C; the adjustment of the photoinitiator and the silicone produce the correct polymerisation without the varnish adhering to the die; and the introduction of an inline polymerisation test

### A SPECIFIC EMBODIMENT OF THE APPLIED-FOR PATENT

This procedure for the production of a flexographic varnish consists of at least five phases:

In a first phase, the combination between the acrylic oligomers and the bi-functional and tri-functional monomers is produced, which assists the said monomers in reducing viscosity in order to obtain a different application viscosity of between 30 and 50 seconds with a Ford cup No of 4 at 35°C

Subsequently, in a second phase, a photoinitiator system is added with stirring, which releases free radicals in the presence of ultraviolet radiation.

In a third phase, a silicone, with a high degree of shearing, is added with stirring, which completes the flexographic varnish formulation.

The following phases are employed in order to endow the varnish with certain characteristics of quality in order to make it useful for the cited nickel dies.

Thus, the varnish is filtered through successive filters with sizes of between 10 and 1 microns.

Lastly, in the fifth phase, the now-filtered varnish is subjected to an inline polymerisation test, printing the varnish and pressing it against the holographic die at the same time as it is exposed to ultraviolet radiation to cause polymerisation, with this test consisting of verifying the insolubility of the now-polymerised varnish through the contact of the referred varnish with alcohol.

In order to achieve the previously-described procedure, the following proportions were employed:
- Oligomers, between 7 and 30%
- Tri-functional monomers, between 30 and 55%
- Photoinitiators, between 5 and 15%
- Polymerisation coinitiators, between 4 and 17%, and
- Silicones, between 0.5 and 2%

It should also be pointed out that the employed oligomers are acrylic and may be either epoxyacrylic or pure acrylic or a mixture of the two.

With respect to the photoinitiator, the inventor has used benzophenon and/or a benzyldimethylketal.

An aminoacrylate has also been employed as a polymerisation coinitiator. It should be pointed out that there are authors who consider this to be part of the photoinitiator system (although without this strictly being the case), since it combined with the true photoinitiators to accelerate polymerisation.

With regard to the silicones, those having a silaneacrylate nature have been used.

A mono-functional mnomer may be added in the proportion of 0.1 to 30%, and/or a bi-functional monomer in a proportion of between 5 and 25%.

### EXAMPLE 1

The first of the examples of the products obtained by means of the previously described procedure for the production of a flexographic varnish, together with the indicated components and proportions, is as follows:
- Epoxy acrylate, 23.7%, as oligomers
- Tripropylenglycol diacrylate (TPGDA), 10.7%, as bi-functional monomer
- Trimethylolpropane triacrylate (TMPTA), 46% as a tri-functional monomer
- Oligomer tetraacrylate, 5.2%, as oligomer
- Benzyldimethylketal, 1.2% as photoinitiator
- Aminoacrylate, 7.1%, as polymerisation coinitiator
- Benzophenon, 4.8% as photoinitiator, and
- Silicone, 1.3%

### EXAMPLE 2

The second example of a product obtained by means of the previously described flexographic varnish production procedure, replacing the bi-functional monomer of Example 1, with a mono-functional monomer, together with the indicated components and proportions, is as follows:
- Acrylic oligomer, 13.5%
- Ethoxylated trimethylolpropane triacrylate (TMPEOTA), 40%, as tri-functional monomer
- Mono-functional acrylated monomer, 25%
- Tripropylenglycol dicrylate (TPGDA), 9.44%, as bi-functional monomer
- Benzyldimethylketal, 1.3%, as photoinitiator
- Aminoacrylate, 5.7%, as polymerisation coinitiator
- Benzophenon, 3.9% as photoinitiator, and
- Silicone, 1.1 %

## Claims

1. A process for the production of a flexographic varnish **characterised in that** it consists of the following steps:
combining acrylic oligomers with tri-functional monomers in order to obtain a different application viscosity of between 30 and 50 seconds of Ford cup No 4, at 35 DEG C.
adding a photoinitiator system, which releases free radicals in the presence of ultraviolet light, with stirring.
adding a silicone, with a high degree of shearing with stirring, which completes the flexographic varnish formulation.
passing the varnish through filters with sizes of between 10 and 1 microns.
subjecting the now-filtered varnish to an in line polymerisation test, printing the varnish and pressing it against the holographic die at the same time as it is exposed to ultraviolet radiation to cause polymerisation, with this test consisting of verifying the insolubility of the now-polymerised varnish through the contact of the referred varnish with alcohol.
With the following proportions:
oligomers between 7 and 30%
tri-functional monomers between 30 and 55%
photoinitiators between 5 and 15%
polymerisation coinitiators between 4 and 17% and
silicones between 0.5 and 2%

2. A process in accordance with claim 1, **characterised in that** the said oligomers are either epoxy acrylic or pure acrylic.

3. A process in accordance with claims 1 or 2, **characterised in that** the photoinitiator system consists of a benzophenon and/or a benzyldimethylketal.

4. A process in accordance with claims 1, 2 or 3, **characterised in that** the polymerisation coinitiator is an aminoacrylate.

5. A process in accordance with claims 1, 2, 3 or 4, **characterised in that** the silicone is a silaneacrylate.

6. A process in accordance with claims 1, 2, 3 or 4, **characterised in that** a mono-functional monomer is also added in a proportion of between 0.1 and 30%.

7. A process in accordance with claims 1, 2, 3, 4 or 5, **characterised in that** a bi-functional monomer is also added in a proportion of between 5 and 25%.

8. A product obtained in accordance with the previously described process which is formed from the following components:
• oligomers between 7 and 30%
• tri-functional monomers between 30 and 55%
• at least one photoinitiator between 5 and 15%
• at least one polymerisation coinitiator between 4 and 17% and
• silicone between 0.5 and 2%

9. A product in accordance with claim 8, **characterised in that** the said oligomers are either epoxy acrylic or pure acrylic.

10. A product in accordance with claim 8 or 9, **characterised in that** the photoinitiator system consists of a benzophenon and/or a benzyldimethylketal.

11. A product in accordance with claim 8, 9 or 10, **characterised in that** the polymerisation coinitiator is an aminoacrylate.

12. A product in accordance with claim 8, 9, 10 or 11, **characterised in that** the silicone is a silaneacrylate.

13. A product in accordance with claim 8, 9, 10, 11 or 12, **characterised in that** a mono-functional monomer is also added in a proportion of between 0.1 and 30%.

14. A product in accordance with claim 8, 9, 10, 11, 12 or 13, **characterised in that** a bi-functional monomer is also added in a proportion of between 5 and 25%.

15. A product in accordance with at least one the claims 8 to 14, **characterised in that** it is made up of the following components:
• Epoxy acrylate, 23.7%, as oligomer
• Tripropylenglycol diacrylate (TPGDA), 10.7%, as bi-functional monomer
• Trimethylolpropane triacrylate (TNPTA), 46% as a tri-functional monomer
• Oligomer tetraacrylate, 5.2%, as oligomer
• Benzyldimethylketal, 1.2%, as photoinitiator
• Aminoacrylate, 7.1 %, as polymerisation coinitiator
• Benzophenon, 4.8% as photoinitiator, and
• Silicone, 1.3%

16. A product in accordance with at least one the claims 8 to 14, **characterised in that** it is made up of the following components:
• Acrylic oligomer, 13.5%
• Ethoxylated trimethylolpropane triacrylate (TMPEOTA), 40%, as tri-functional monomer
• Tripropylenglycol diacrylate (TPGDA), 9.44%, as bi-functional monomer
• Mono-functional acrylated monomer, 25%
• Benzyldimethylketal, 1.3%, as photoinitiator
• Aminoacrylate, 5.7%, as polymerisation coinitiator
• Benzophenon, 3.9% as photoinitiator, and
• Silicone, 1.1%

## Patentansprüche

1. Verfahren zur Herstellung einer Flexodruckfarbe, **dadurch gekennzeichnet, dass** es aus folgenden Schritten besteht:
Versetzen von Acryloligomeren mit trifunktionellen Monomeren zur Erzielung einer verschiedenen Anwendungsviskosität zwischen 30 und 50 Sekunden im Fordbecher Nr. 4 bei 35 °C,
Zugabe eines Fotoinitiatorsystems unter Rühren, das in Gegenwart von UV-Licht Radikale freisetzt,
Zugabe eines Silikons unter hoher Scherung und Rühren, wodurch die Herstellung der Flexodruckfarbenformulierung vervollständigt wird,
Filtern der Druckfarbe durch Filter der Größe 10 bis 1 Mikron,
Durchführung eines Inline-Polymerisationstests an der gefilterten Druckfarbe,
Drucken der Druckfarbe und Pressen gegen die Holografieform, während sie gleichzeitig zwecks Polymerisation einer UV-Bestrahlung ausgesetzt wird, wobei dieser Test darin besteht, die Unlöslichkeit der polymerisierten Druckfarbe bei Berührung der betreffenden Druckfarbe mit Alkohol nachzuweisen,
wobei die Druckfarbe aus folgenden Anteilen besteht:
7 bis 30% Oligomere,
30 bis 55% trifunktionelle Monomere,
5 bis 15% Fotoinitiatoren
4 bis 17% Polymerisations-Coinitiatoren sowie
0,5 bis 2% Silikone.

2. Verfahren nach Anspruch 1, **dadurch gekennzeichnet, dass** es sich bei den Oligomeren entweder um Epoxyacryl- oder reine Acryloligomere handelt.

3. Verfahren nach Anspruch 1 oder 2, **dadurch gekennzeichnet, dass** das Fotoinitiatorsystem aus Benzophenon und/oder Benzyldimethylketal besteht.

4. Verfahren nach Ansprüchen 1, 2 oder 3, **dadurch gekennzeichnet, dass** es sich bei dem Polymerisations-Coinitiator um ein Aminoacrylat handelt.

5. Verfahren nach Ansprüchen 1, 2, 3 oder 4, **dadurch gekennzeichnet, dass** es sich bei dem Silikon um Silanacrylat handelt.

6. Verfahren nach Ansprüchen 1, 2, 3 oder 4, **dadurch gekennzeichnet, dass** außerdem die Zugabe eines monofunktionellen Monomers in einem Anteil von 0,1 bis 30% erfolgt.

7. Verfahren nach Ansprüchen 1, 2, 3, 4 oder 5, **dadurch gekennzeichnet, dass** außerdem die Zugabe eines difunktionellen Monomers in einem Anteil von 5 bis 25% erfolgt.

8. Produkt, hergestellt nach dem zuvor beschriebenen Verfahren, das aus folgenden Bestandteilen erhalten wird:
• 7 bis 30% Oligomere,
• 30 bis 55% trifunktionelle Monomere,
• 5 bis 15% zumindest eines Fotoinitiators,
• 4 bis 17% zumindest eines Polymerisations-Coinitiators sowie
• 0,5 bis 2% Silikon.

9. Produkt nach Anspruch 8, **dadurch gekennzeichnet, dass** es sich bei den Oligomeren entweder um Epoxyacryl- oder reine Acryloligomere handelt.

10. Produkt nach Anspruch 8 oder 9, **dadurch gekennzeichnet, dass** das Fotoinitiatorsystem aus Benzophenon und/oder Benzyldimethylketal besteht.

11. Produkt nach Ansprüchen 8, 9 oder 10, **dadurch gekennzeichnet, dass** es sich bei dem Polymerisations-Coinitiator um Aminoacrylat handelt.

12. Produkt nach Ansprüchen 8, 9, 10 oder 11, **dadurch gekennzeichnet, dass** es sich bei dem Silikon um Silanacrylat handelt.

13. Produkt nach Ansprüchen 8, 9, 10, 11 oder 12, **dadurch gekennzeichnet, dass** außerdem die Zugabe eines monofunktionellen Monomers in einem Anteil von 0,1 bis 30% erfolgt.

14. Produkt nach Ansprüchen 8, 9, 10, 11, 12 oder 13, **dadurch gekennzeichnet, dass** außerdem die Zugabe eines difunktionellen Monomers in einem Anteil von 5 bis 25% erfolgt.

15. Produkt nach mindestens einem der Ansprüche 8 bis 14, **dadurch gekennzeichnet, dass** es aus folgenden Bestandteilen besteht:
• 23,7% Epoxyacrylat als Oligomer
• 10,7% Tripropylenglycol-diacrylat (TPGDA) als difunktionelles Monomer
• 46% Trimethylpropan-triacrylat (TNPTA) als trifunktionelles Monomer
• 5,2% Tetraacrylat-Oligomer als Oligomer
• 7,1% Aminoacrylat als Polymerisations-Coinitiator
• 4,8% Benzophenon als Fotoinitiator
• 1,3% Silikon.

16. Produkt nach mindestens einem der Ansprüche 8 bis 14, **dadurch gekennzeichnet, dass** es aus folgenden Bestandteilen besteht:
• 13,5% Acryl-Oligomer
• 40% ethoxyliertes Trimethylpropan-triacrylat (TMPEOTA) als trifunktionelles Monomer
• 9,44% Tripropylenglycol-diacrylat (TPGDA) als difunktionelles Monomer
• 25% Monofunktionelles Acrylmonomer
• 1,3% Benzyldimethylketal als Fotoinitiator
• 5,7% Aminoacrylat als Polymerisations-Coinitiator
• 3,9% Benzophenon als Fotoinitiator sowie
• 1,1 % Silikon.

## Revendications

1. Procédé destiné à la fabrication d'un vernis flexographique **caractérisé en ce qu'**il comprend les étapes suivantes:
combiner des oligomères acryliques avec des monomères trifonctionnels afin d'obtenir une viscosité d'application différente de 30 à 50 secondes avec le viscosimètre Ford n° 4, à 35 °C.
ajouter un système photo-initiateur, qui libère les radicaux libres en présence de lumière ultraviolette, en l'agitant.
ajouter une silicone ayant un haut degré de cisaillement avec l'agitation, qui complète la formulation du vernis flexographique.
faire passer du vernis au travers de filtres de taille comprise entre 10 et 1 micron.
soumettre le vernis, après filtrage, à un test de polymérisation en ligne, étaler le vernis et le comprimer contre la matrice holographique en même temps qu'il est exposé à une radiation ultraviolette pour provoquer sa polymérisation, le test consistant en une vérification de l'insolubilité du vernis après polymérisation par le contact dudit vernis avec de l'alcool.
Dans les proportions suivantes:
oligomères entre 7 et 30%.
monomères trifonctionnels entre 30 et 55%
photo-initiateurs entre 5 et 15%
co-initiateurs de polymérisation entre 4 et 17% et
silicones entre 0,5 et 2%

2. Procédé selon la revendication 1, **caractérisé en ce que** lesdits oligomères sont soit de l'acrylique époxy soit de l'acrylique pure.

3. Procédé selon les revendications 1 ou 2, **caractérisé en ce que** le système photo-initiateur consiste en un benzophénone et/ou un benzyldiméthylcétal.

4. Procédé selon les revendications 1, 2 ou 3, **caractérisé en ce que** le co-initiateur de polymérisation est un aminoacrylate.

5. Procédé selon les revendications 1, 2, 3 ou 4, **caractérisé en ce que** la silicone est un silaneacrylate.

6. Procédé selon les revendications 1, 2, 3 ou 4, **caractérisé en ce qu'**un monomère monofonctionnel est également ajouté dans une proportion d'entre 0,1 et 30%.

7. Procédé selon les revendications 1, 2, 3, 4 ou 5, **caractérisé en ce qu'**un monomère bifonctionnel est également ajouté dans une proportion d'entre 5 et 25%.

8. Produit obtenu conformément au procédé décrit ci-dessus, et formé à partir des composants suivants:
• Oligomères entre 7 et 30%
• Monomères trifonctionnels entre 30 et 55%
• Au moins un photo-initiateur entre 5 et 15%
• Au moins un co-initiateur de polymérisation entre 4 et 17% et
• Silicone entre 0,5 et 2%

9. Produit selon la revendication 8, **caractérisé en ce que** lesdits oligomères sont soit de l'acrylique époxy soit de l'acrylique pure.

10. Produit selon la revendication 8 ou 9, **caractérisé en ce que** le système photo-initiateur consiste en un benzophénone et/ou un benzyldiméthylcétal.

11. Produit selon la revendication 8, 9 ou 10, **caractérisé en ce que** le co-initiateur de polymérisation est un aminoacrylate.

12. Produit selon la revendication 8, 9, 10 ou 11, **caractérisé en ce que** la silicone est un silaneacrylate.

13. Produit selon la revendication 8, 9, 10, 11 ou 12, **caractérisé en ce qu'**un monomère monofonctionnel est également ajouté dans une proportion d'entre 0,1 et 30%.

14. Produit selon la revendication 8, 9, 10, 11, 12 ou 13, **caractérisé en ce qu'**un monomère bifonctionnel est également ajouté dans une proportion d'entre 5 et 25%.

15. Produit selon au moins l'une des revendications 8 à 14, **caractérisé en ce qu'**il est constitué des composants suivants:
• Époxy acrylate, 23,7% en tant qu'oligomère
• Tripropylène glycol diacrylate (TPGDA), 10,7% en tant que monomère bifonctionnel
• Triméthylol propane triacrylate (TMPTA), 46% en tant que monomère trifonctionnel
• Oligomère tétraacrylate 5,2% en tant qu'oligomère
• Benzyldiméthylcétal 1,2% en tant que photo-initiateur
• Amine acrylate 7,1 % en tant que co-initiateur de polymérisation
• Benzophénone 4,8% en tant que photo-initiateur, et
• Silicone 1,3%

16. Produit selon au moins l'une des revendications 8 à 14, **caractérisé en ce qu'**il est constitué des composants suivants:
• Oligomère acrylique: 13,5%
• Triméthylol propane triacrylate éthoxylé (TMPEOTA): 40%, en tant que monomère trifonctionnel
• Tripropylène glycol diacrylate (TPGDA): 9,44% en tant que monomère bifonctionnel
• Monomère acrylate monofonctionnel: 25%
• Benzyldiméthylcétal: 1,3%, en tant que photo-initiateur
• Aminoacrylate: 5,7% en tant que co-initiateur de polymérisation
• Benzophénone: 3,9% en tant que photo-initiateur, et
• Silicone: 1,1 %
